Europäisches Patentamt

(19) European Patent Office

Office européen des brevets

(11) Numéro de publication: **0 010 031**
**B1**

(12) **FASCICULE DE BREVET EUROPEEN**

(45) Date de publication du fascicule de brevet: **30.12.81**

(51) Int. Cl.³: **G 02 B 27/50, G 02 B 23/12**

(21) Numéro de dépôt: **79400669.2**

(22) Date de dépôt: **20.09.79**

(54) **Procédé pour la transformation d'images thermiques en images visibles, dispositif pour sa mise en oeuvre et utilisation.**

(30) Priorité: **29.09.78 FR 7828041**

(43) Date de publication de la demande:
**16.04.80 Bulletin 80/8**

(45) Mention de la délivrance du brevet:
**30.12.81 Bulletin 81/52**

(84) Etats Contractants Désignés:
**AT BE CH DE GB IT LU NL SE**

(56) Documents cités:
FR - A - 1 452 665
FR - A - 2 081 937
FR - A - 2 180 572

(73) Titulaire: **ANVAR Agence Nationale de Valorisation de la Recherche
13, rue Madeleine Michelis
F-92522 Neuilly-sur-Seine (FR)**

(72) Inventeur: **Imbert, Christian
37, rue de l'Essonne
F-91610 Ballancourt (FR)**
Inventeur: **Levy, Yves
35, rue Savier
F-92240 Malakoff (FR)**
Inventeur: **Loulergue, Jean-Claude
84, rue d'Alleray
F-75015 Paris (FR)**

(74) Mandataire: **Harlé, Robert et al,
c/o Cabinet Harlé & Lechopiez 21, rue de la Rochefoucauld
F-75009 Paris (FR)**

Courier Press, Leamington Spa, England.

# 0010031

Procédé pour la transformation d'images thermiques en images visibles, dispositif pour sa mise en oeuvre et utilisation

La présente invention concerne un procédé pour la transformation d'images thermiques, notamment d'images infrarouges, en images visibles, ainsi qu'un dispositif pour la mise en oeuvre dudit procédé.

Il est bien connu que tout corps, dont la température est supérieure au zéro absolu, émet un rayonnement dans le domaine infrarouge, dont l'intensité spectrale dépend de la nature de la surface émettrice, et de la température absolue du corps. Pour beaucoup d'applications dans le domaine militaire, médical et industriel, il est souhaitable de convertir ces rayons infrarouges en lumière visible, afin d'observer les corps ou de mesurer leur température superficielle.

Il existe des systèmes dans lesquels le rayonnement infrarouge est transformé en lumière visible au moyen de tubes amplificateurs d'images. Cependant, ces systèmes n'utilisant qu'une faible partie du spectre infrarouge, c'est-à-dire celle proche du visible, dans la bande située entre 0,8 $\mu$m et 1,4 $\mu$m. Pour les corps se trouvant aux alentours de la température ambiante, la plus grande partie de l'énergie infrarouge émise est perdue, puisqu'elle se situe vers 10 $\mu$m, et ne peut être exploitée de cette manière.

D'autres systèmes utilisent le spectre infrarouge proche et loitain entre 1 $\mu$m et 100 $\mu$m, par exemple les caméras avec les récepteurs thermiques du type thermocouple, bolomètre, pyroélectrique. Ces instruments nécessitent environ une minute pour donner une image. Ils sont par conséquent incapables d'enregistrer des objets mouvants.

Il existe des instruments qui enregistrent des corps mobiles avec une cadence proche des normes de télévision classique. Pour obtenir ces résultats, on utilise des récepteurs quantiques qui doivent être refroidis avec l'hélium liquide ou l'oxygène liquide, ce qui est une servitude contraignante.

Dans un autre système, qui demande quelques secondes, environ 3 à 6 secondes, pour produire une image visible, on utilise un liquide qui est évaporé ou condensé localement, en plus ou moins grande quantité, selon l'intensité du rayonnement infrarouge incident. Cependant, à part le fait qu'il faut quelques secondes pour produire une image, ce qui est encore trop long pour observer des corps mobiles, le système doit être ramené à son état initial pour observer une autre image, ce qui demande au moins une minute de manipulation, même entre les mains d'un technicien expérimenté.

Afin de permettre l'observation de corps mobiles ou d'évènements dans l'infrarouge, il existe aussi un certain nombre de dispositifs qui utilisent une couche sensible localement modifiée selon l'intensité du rayonnement. Ces modifications locales sont usuellement des déformations de la surface d'une couche sensible. L'image en relief résultante est utilisée pour contrôler une lumière visible qui, après avoir été réfléchie ou transmise par la surface déformée, passe à travers un système d'observation, par exemple avec strioscopie, ou contraste de phase, un système holographique, ou autre.

Avec de tels systèmes, la difficulté se trouve dans le choix d'une couche sensible appropriée. De telles couches sont souvent de faible sensibilité, et/ou techniquement difficiles à réaliser. Par exemple, la partie chauffée par le rayonnement infrarouge d'une fine membrane solide se dilate, les régions voisines non chauffées ou chauffées différemment, s'opposent à la dilatation du contour de la première partie, et un flambement à deux dimensions se produit.

On a également proposé (voir brevet français n° 1.452.665) un transformateur d'images dans lequel la couche de commande est une mince pellicule d'un liquide à faible viscosité, par exemple un hydrocarbure. La couche sensible comprend alors un film mince liquide, qui absorbe le rayonnement et s'échauffe localement. Il en résulte une variation de densité, et un mouvement de convection s'établit qui peut être observé si le liquide contient de fines particules en suspension. Dans les mêmes conditions, la surface libre du liquide se déforme et reproduit en relief l'image infrarouge localisée dans le liquide. Enfin, une couche sensible peut être réalisée par un semi-conducteur. Ce n'est pas la surface qui se déforme, mais l'indice de réfraction du matériau qui change avec l'intensité du rayonnement infrarouge. Ce procédé est peu sensible, comme tous ceux qui sont basés sur la variation thermique d'un paramètre optique d'un corps pur.

A titre de document illustrant la technique antérieure, on peut également citer le brevet français 71 08.811 (publication n° 2.081.937) qui décrit un transformateur d'images dans lequel le film de liquide, déformable localement en fonction de l'intensité du rayonnement infrarouge, est supporté par une membrane mince librement déformable.

L'inconvénient commun à tous les transformateurs d'images mettant en oeuvre une couche sensible est que celle-ci doit être régénérée en permanence quand on utilise le transformateur. Il est alors nécessaire de prévoir complémentairement des dispositifs du genre essuie-glace qui étalent la couche sur son support. Nécessairement donc, la construction et l'utilisation de tels transformateurs soulèvent des problèmes technologiques. Le support de la couche sensible n'est pas suffisamment résistant pour supporter le dispositif "essuie-glace". En outre, l'étendue de la couche est forcément limitée par les impératifs de construction et de renouvellement de la couche sensible.

Le brevet FR 72 14.212 (publication numéro 2 180 572) a pour objet un procédé, dans lequel on transforme des images thermiques, en particulier en vue de l'observation d'un objet émettant des radiations thermiques, notamment infrarouges, en formant une image thermique, en particulier celle dudit objet, sur une face d'un dioptre réfléchissant, qui est recouverte d'au moins une couche de matière

**0010031**

absorbant les radiations thermiques, la répartition des températures dans cette image thermique se traduisant alors par une variation des paramètres physiques de ladite couche, en éclairant l'autre face dudit dioptre, qui est réfléchissante, par un faisceau de rayons lumineux parallèles dont les caractéristiques optiques subissent, lors de la réflexion sur le dioptre, une variation correspondante de ses caractéristiques optiques, et en formant dans un plan d'observation une image secondaire observable mettant en évidence cette dernière variation. Le procédé, objet du brevet FR précité, met à profit la variation d'indice et d'épaisseur de la couche de matière absorbant les radiations thermiques.

Pour la mise en oeuvre d'un tel procédé, la réflexion du faisceau de rayons lumineux parallèles s'effectue sur un dioptre plan constitué par une interface solide-solide ou solide-liquide; le dioptre est par exemple l'hypoténuse d'un prisme sur lequel on a déposé une couche solide telle qu'un ester méthacrylique.

La présente invention a pour but de fournit un procédé et un dispositif du genre ci-dessus, qui éliminent les inconvénients précédemment mentionnés.

L'un des buts essentiels de l'invention est l'obtention d'un transformateur d'images de grande sensibilité, grâce au fait que la réflexion ou la transmission du rayonnement s'effectue sur une interface liquide-liquide.

L'invention a également pour but de fournit un transformateur d'images ne comportant aucun dispositif mécanique associé à la couche sensible, le film mince étant réalisé par un simple mélange de deux liquides.

L'invention a encore pour but de fournit un transformateur d'images dans lequel les dimensions de la couche sensible peuvent être choisies aussi grandes qu'on le désire, ce qui permet en particulier l'observation d'objets de grande étendue.

La présente invention concerne donc un procédé pour la transformation d'images thermiques en images visibles, notamment en vue de l'observation d'un objet émettant des radiations infrarouges, dans lequel on forme une image thermique, notammment celle dudit objet, sur une face d'un dioptre plan qui est recouvert d'au moins une couche de matière liquide absorbant les radiations électromagnétiques, la répartition des températures dans cette image thermique se traduisant alors par une variation des paramètres physiques de ladite couche, on éclaire l'autre face dudit dioptre, qui est réfléchissante ou transmettrice par un faisceau de rayons lumineux parallèles dont les caractéristiques optiques subissent, lors de la réflexion ou de la transmission par le dioptre plan, une variation correspondante de ses caractéristiques optiques, et on forme dans un plan d'observation une image secondaire observable mettant en évidence cette dernière variation, ledit procédé étant caractérisé en ce qu'on effectue la réflexion ou la transmission du faisceau de rayons lumineux parallèles sur un dioptre plan constitué par une interface liquide-liquide de faible tension superficielle obtenue par mélange de deux liquides partiellement miscibles à température et pression de fonctionnement.

Le procédé de l'invention met à profit la déformation locale de l'interface liquide-liquide, selon l'intensité du rayonnement électromagnétique, notamment l'infrarouge, du fait de la formation d'une image thermique sur ladite interface. En effet, l'échauffement du système liquide-liquide, par absorption du rayonnement infrarouge, conduisant ainsi à la formation d'une image thermique, crée des gradients horizontaux ou verticaux de température qui déforment le dioptre plan liquide-liquide. On obtient alors une image en relief. La déformation ainsi induite par un faisceau infrarouge focalisé sur la surface conduit à une interface jouant le rôle d'un miroir sphérique pour le faisceau de rayons lumineux parallèles: ce faisceau ainsi modulé du fait de la déformation de l'interface est réfléchi ou transmis dans un plan d'observation constitué d'un écran ou d'un système de détection qui peut, suivant le cas, utiliser les méthodes de type strioscopie, strioscopie interférentielle, contraste de phase ou holographie.

Du fait qu'un milieu déformable a une réponse en fréquences spatiales du type passe-bande, on interpose, de préférence, une grille sur l'image thermique, ce qui permet en outre d'optimiser la réponse du système aux basses fréquences. Lorsque l'illumination thermique du système est uniforme, la fonction de la grille est de créer quand même des gradients de température dans la solution absorbant les radiations électromagnétiques, donc de détecter une fréquence spatiale nulle (le fond).

La grille, de préférence métallique, est placée au voisinage de la surface libre de la solution absorbant les radiations électromagnétiques. Dans une autre forme de réalisation, il est possible de placer cette grille au niveau de l'interface liquide-liquide.

Dans un mode de réalisation plus avantageux, on remplace la grille précédente par l'image d'un réseau formée sur la surface de la solution absorbant les radiations électromagnétiques. On projette donc simultanément sur cette surface le rayonnement infrarouge et l'image du réseau précité. L'avantage de ce procédé est que tous les rayons infrarouges arrivent sur la couche sensible préalablement modulée spatialement, l'énergie utilisée pour former l'image du réseau étant beaucoup plus intense que celle du rayonnement IR à détecter. On peut ainsi augmenter la sensibilité par un facteur 2, par rapport à la grille métallique précédemment mentionnée.

Dans une forme de réalisation particulièrement préférée du procédé selon l'invention, le faisceau de rayons lumineux parallèles ou issu d'une source ponctuelle provient d'une source émettant une lumière visible, ce qui permet ainsi de transformer une image infrarouge en image visible.

La présente invention concerne en outre un dispositif pour la mise en oeuvre du procédé de l'invention, ledit dispositif constituant un transformateur d'images thermiques et comportant un

3

système d'éclairage donnant un faisceau de rayons lumineux parallèles ou un faisceau issu d'une source ponctuelle, un dioptre plan réfléchissant ou transmettant le faisceau, un dispositif optique adapté notamment aux radiations infrarouges, et un système d'observation, le dioptre réfléchissant étant recouvert d'au moins une couche de matière liquide absorbante sur laquelle ledit dispositif optique forme une image thermique d'un objet émettant des radiations électromagnétiques, la répartition des températures dans cette image se traduisant par une variation des paramètres physiques de ladite couche, ledit faisceau réfléchi ou transmis subissant alors une variation correspondante de ses caractéristiques optiques, cette variation étant mise en évidence par ledit système d'observation, ledit transformateur étant caractérisé en ce que le dioptre plan est constitué par une interface liquide-liquide de faible tension superficielle obtenue par mélange de deux liquides partiellement miscibles à la température et sous pression d'utilisation.

Comme déjà mentionné ci-dessus, il est souhaitable d'incorporer dans le transformateur selon l'invention une grille située au voisinage de la surface libre du liquide absorbant les radiations thermiques, ou un réseau dont on forme l'image au voisinage de ladite surface libre.

Une grille, par exemple métallique, est constituée de barreaux métalliques espacés entre eux d'une distance égale à la largeur des barreaux, la période x de la grille étant choisie de manière que le rapport x/d soit compris entre 10 et 20 (d étant l'épaisseur de la couche de liquide absorbant les radiations thermiques).

Dans le cas où l'on utilise un réseau, le pas de celui-ci est égal à celui de la grille métallique précitée. L'image de ce réseau sur la surface libre du liquide absorbant les radiations électromagnétiques est formée de manière classique à l'aide d'une lentille et d'une lame semi-transparente disposées au-dessus de ladite surface libre.

Dans la suite de la description, on désigne par récepteur l'ensemble constitué par les liquides formant une interface liquide-liquide, étant bien entendu que l'on n'est nullement limité à une système diphasé et qu'un système à trois phases permet également la mise en oeuvre du procédé selon l'invention.

Dans un autre mode de réalisation particulièrement avantageux du transformateur selon l'invention, on utilise un récepteur bloqué, obtenu de la manière suivante:

On réalise un système à deux phases liquides séparées par une interface liquide-liquide nette et optiquement plane, et on bloque ce récepteur en disposant sur la surface libre du liquide absorbant les radiations thermiques une lame transparente à l'IR; on dispose ainsi d'un recepteur très sensible et d'un emploi très commode du fait qu'il est bloqué par une lame.

Selon une autre variante très avantageuse, il est possible d'utiliser un récepteur à trois phases, c'est-à-dire que le dioptre réfléchissant ou transmetteur est recouvert de deux couches de matière liquide, l'une des couches absorbant les radiations thermiques. Cet ensemble triphasé est ensuite recouvert comme précédemment d'une lame transparente à l'IR de manière à réaliser un récepteur bloqué, plus commode d'emploi.

Dans un mode de réalisation préféré, l'invention concerne un transformateur d'images thermiques en vue de l'observation d'un objet émettant des radiations infrarouges, ledit transformateur comprenant des moyens pour recevoir les radiations infrarouges émises par l'objet à étudier, lesdits moyens comprenant une cellule sensible aux rayons infrarouges, des moyens pour éclairer ladite cellule sensible et des moyens pour traiter ou visualiser les rayons lumineux sortant de ladite cellule, ledit transformateur etant caractérisé en ce que la cellule sensible comprend une première cuve contenant deux liquides partiellement miscibles à la température et à la pression de fonctionnement et fourmant ainsi une interface liquide-liquide de faible tension superficielle, dénommée interface active, une face de ladite première cuve tournée vers ledit objet étant perméable aux rayons infrarouges, une deuxième cuve contenant une autre interface liquide-liquide, dite de compensation, laquelle reste sensiblement parallèle à l'interface active, la disposition étant telle que les radiations infrarouges émises par l'objet sont focalisées sur le liquide le moins dense contenu dans la première cuve, que les moyens pour éclairer la cellule produisent un faisceau de rayons lumineux parallèles éclairant l'interface active avec un angle d'incidence tel que leur réflexion sur celle-ci soit sensiblement totale, lesdits rayons réfléchis sur l'interface active venant à leur tour se réfléchir sur l'interface de compensation en formant un faisceau de rayons capables d'être visualisés dans les moyens de traitement et que le faisceau limineux parallèle éclairant la cellule sensible traverse ladite cellule sans modification sensible de sa direction, quelle que soit la position dans l'espace du transformateur.

Dans une forme de réalisation particulière du transformateur précité, la cellule sensible est essentiellement constitué de deux cuves accolées à deux faces parallèles d'un rhomboèdre, la première cuve comprenant l'interface active sensible aux rayons infrarouges, la face de la première cuve opposée au rhomboèdre et tournée vers l'objet à étudier comprenant une fenêtre transparente aux infrarouges telle qu'une fenêtre en germanium, un gaz inerte tel que l'azote étant interposé dans la zone libre de la premièr cuve entre la couche liquide et la fenêtre, la deuxième cuve contenant essentiellement un bain de mercure et un liquide d'indice identique à celui du verre du rhomboèdre, lequel liquide est disposé entre le bain de mercure et la face adjacente du rhomboèdre.

Dans une forme de réalisation de ce type qui comprend un rhomboèdre interposé entre les deux cuves de la cellule sensible, les faces libres du rhomboèdre sont perpendiculaires aux rayons moyens du

0 010 031

faisceau lumineux éclairant la cellule. L'angle de réflexion du faisceau lumineux sur l'interface active est avantageusement de 60°.

De préférence, les moyens pour recevoir les radiations infrarouges comprennent dans le sens desdites radiations, un objectif et un diaphragme, par exemple un diaphragme à iris, permettant de focaliser lesdites radiations sur le liquide le moins dense contenu dans la première cuve de la cellule sensible.

De préférence, les moyens pour éclairer la cellule sensible sont constiués d'un collimateur comprenant une source lumineuse émettant dans le visible, d'un condenseur, d'un diaphragme et d'un objectif, ce qui permet d'obtenir un faisceau de rayons lumineux parallèles.

De préférence, les moyens pour traiter et visualiser les rayons lumineux sortant de la cellule comprennent un ensemble afocal constitué de deux lentilles cylindriques, un prisme de Porro, un verre dépoli et une lentille bi-oculaire.

La caractéristique essentielle de l'invention est la combinaison de deux liquides I et II partiellement miscibles, produisant une interface liquide-liquide de faible tension superficielle et optiquement plane.

Pour obtenir cette interface liquide-liquide, on opère de la manière suivante: on mélange deux liquides I et II qui ont la propriété fondamentale d'être partiellement miscibles à la température et sous la pression d'utilisation. On obtient, dans ces conditions, deux solutions A et B, mutuellement saturées, qui donnent à l'équilibre mécanique une surface de séparation nette et optiquement plane appelée interface liquide-liquide $I_{AB}$. Lorsqu'on utilise le transformateur selon l'invention, l'échauffement du système liquide-liquide par absorption du rayonnement infrarouge crée des gradients de température qui déformant le dioptre plan séparant les deux solutions saturées A et B selon l'intensité du rayonnement incident infrarouge. Le fait que l'interface liquide-liquide ait une faible tension superficielle facilite la déformation de ladite interface.

Ces deux liquides I et II doivent être différents en indice de réfraction et densité, et il est impératif qu'ils soient de faible viscosité. Par exemple, le liquide I a une viscosité comprise entre 0,5 et 100 centistockes à la température de fonctionnement. L'image thermique se forme dans la solution saturée A (liquide porté) à forte concentration en liquide I.

Cette solution A a des propriétés absorbantes dans l'infrarouge proche, c'est-à-dire dans une bande spectrale comprise entre 1 et 100 microns. Il est particulièrement préféré que le liquide I absorbe le rayonnement infrarouge dans la bande spectrale 8 à 12 microns ou 3 à 5 microns, qui sont des fenêtres atmosphériques qui correspondent à l'émission maximale des corps à la température ambiante.

La solution A est un film mince de faible viscosité dont l'épaisseur est comprise entre 5 et 300 microns, de préférence entre 5 et 200 microns, et plus particulièrement entre 5 et 100 microns. La solution A présente une tension superficielle dépendant fortement de la température. C'est une condition nécessaire que contribue à la sensibilité du système. Cette tension superficielle avec l'air est, par exemple, de l'ordre de 0,2 dyne/cm x °C à la température de 20°C. Le mélange des deux liquides I et II, partiellement miscibles, présente aussi un autre avantage: la tension interfaciale du dioptre qui sépare les deux solutions saturées A et B peut avoir une très faible valeur: la tension interfaciale entre les solutions A et B est par exemple de l'ordre de 1 dyne/cm ou moins à la température ambiante. Elle devient nulle à la température critique de miscibilité. Alors, le système diphasé disparaît pour laisser place à une seule phase liquide.

Finalement, la dernière condition à remplir pour obtenir un dispositif très sensible est que la solution A ait une faible conductivité thermique.

L'invention procure un transformateur d'images de grande sensibilité. La sensibilité est d'autant meilleure que la tension superficielle de l'interface liquide-liquide est faible. On a noté en effet qu'il y avait une relation directe entre la sensibilité et ladite tension. Dans la pratique, on utilisera une interface dont la tension superficielle est inférieure à 1 dyne/cm; et de préférence de l'ordre de 0,1 dyne/cm environ.

Comme liquide I, on utilise tout particulièrement les polysiloxanes substitués, les huiles aux silicones, l'acide acétique, le méthanol, l'acide phényl-acétique, l'acide butyrique, la diphénylamine, l'acide propionique, le p-nitrochlorobenzène, l'anhydride acétique, l'acétonitrile, le camphre, l'acide formique, le cyclopentane, le méthylcyclopentane, le cyclohexane, ou le méthylcyclohexane, et le liquide II est le mono-bromonaphthalène, le tétrachlorure de carbone, le sulfure de carbone ou l'iodure de méthylène.

On peut travailler avec le transformateur selon l'invention aussi bien en réflexion totale qu'en transmission. Si l'on opère en réfléxion totale, on dispose d'un prisme sous le système de deux liquides, l'indice de réfraction du liquide II étant supérieur et différent à celui du liquide I, et égal ou sensiblement égal à celui du prisme. Dans ce cas, pour avoir une bonne sensibilité, il faut disposer d'une solution B transparente dans le visible.

Si l'on opère en transmission, la seule condition à respecter est d'utiliser des liquides I et II d'indices très différents.

Le système d'éclairage du transformateur selon l'invention n'est pas critique et est constitué par une source cohérente ou incohérente mono pu polychromatique. Le fait d'utiliser une source visible

5

permet alors de transformer des images infrarouges en images visibles.

Le dispositif optique infrarouge est un objectif dioptrique, catadioptrique, ou catoptrique. Le système d'observation est constitué par un écran ou par un système de détection utilisant les méthodes du type strioscopie, strioscopie interférentielle, contraste de phase ou holographie.

Si l'on utilise comme système d'observation un écran, on peut le disposer soit au voisinage de l'interface liquide-liquide, soit, si l'on travaille en réfléxion totale, directement à la sortie du prisme.

Une autre solution pour effectuer la détection de la déformation de l'interface liquide-liquide consiste à observer des couleurs associées aux déformations des parois mobiles de la solution A, lorsque celles-ci se modifient localement en fonction de l'intensité du rayonnement infrarouge reçu par ladite solution A. En variante, il est également possible de visualiser ladite déformation en incidence normale.

Le transformateur selon la présente invention trouve de nombreuses application, aussi bien dans le domaine militaire que médical et industriel. On se sert de ce dispositif pour rendre visibles les corps au moyen de leur rayonnement calorifique situé dans l'infrarouge, et pour la mesure de gradients superficiels de température des corps.

On utilise donc le transformateur selon l'invention chaque fois que l'on désire observer des répartitions de température ou d'émissivité à distance.

Sans vouloir faire une énumération exhaustive des possibilités d'application, on peut citer à titre d'exemples les domaines très variés où l'emploi dudit transformateur est souhaitable: aéronautique et espace, automobile, mécanique, métallurgie, électrolyse des métaux, collages, verrerie, papeterie, chaudières à vapeur et installations frigorifiques, bâtiments, vérification dans la production et la distribution d'énergie électrique, électronique, volcanologie, botanique, cartographie des courants marins, etc.

Un exemple de réalisation de l'invention est décrit ci-après, à titre illustratif et nullement limitatif, en référence aux dessins annexés dans lesquels:

Fig. 1 représente la combinaison des deux liquides permettant d'obtenir une interface liquide-liquide optiquement plane;

Fig. 2 représente la déformation d'une interface de la combinaison de la figure 1 sous l'effet d'une radiation infrarouge;

Fig. 3 représente le récepteur infrarouge utilisable en réflexion totale dans le transformateur selon l'invention;

Fig. 4 représente le transformateur selon l'invention opérant en réflexion totale;

Figs. 5 à 8 représentent d'autres modes de réalisation du récepteur utilisable dans le transformateur selon l'invention; et

Fig. 9 représente le transformateur selon l'invention opérant en transmission normale;

Fig. 10 est une vue schématique d'un montage préféré d'un transformateur selon l'invention.

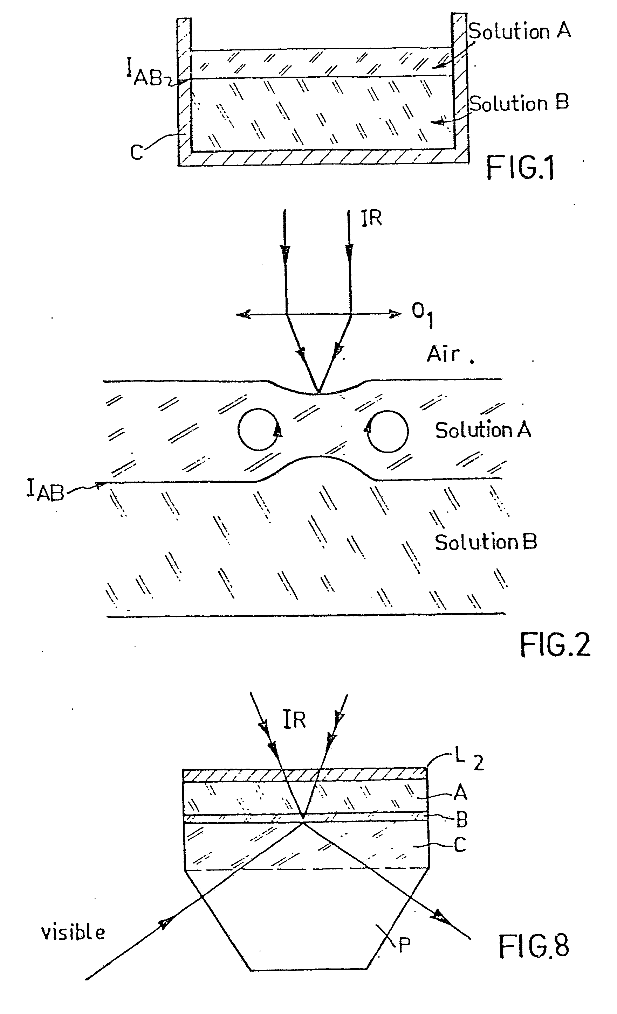

La figure 1 représente l'état d'equilibre résultant de la combinaison de deux liquides I et II. On voit ainsi une solution saturée B à deux constituants, plus dense que la solution A, donc située en dessous. Ce système est maintenu dans une cuve C. La concentration de l'un des constituants I ou II, dans chacune des solutions A et B, ne dépend que de la température et de la pression du système. On peut, par conséquent, en fonction de ces paramètres, obtenir une solution saturée A avec une concentration donnée, et en même temps réaliser facilement une couche mince liquide, d'épaisseur uniforme, réglable à volonté, sur un support liquide, sans limitation d'étendue. En outre, le système est stable: lorsqu'on agite les deux solutions saturées, elles se mélangent. Puis la démixtion joue rapidement: sous l'action de la pesanteur, les deux solutions A et B se séparent, pour redonner l'équilibre qu'elles avaient au départ, c'est-à-dire deux phases liquides séparées par un dioptre plan $I_{AB}$, avec la même concentration qu'au départ pour chacune des solutions A et B. Le dioptre plan $I_{AB}$ forme une surface de séparation nette et optiquement plane.

Lorsqu'on éclaire ce système diphasé par un rayonnement infrarouge·localisé émanant d'une source infrarouge non représentée et focalisée par une optique infrarouge $O_1$, on obtient des déformations telles que représentées sur la figure 2. Le rayonnement infrarouge crée, par échauffement, des tensions horizontales sur la surface libre de la solution A, dues à la variation thermique de la tension superficielle de cette interface. Un écoulement s'établit dans la solution A pour équilibrer ces tensions, et crée une fluctuation de la pression normale (hydrostatique + visqueuse) sur l'interface liquide-liquide $I_{A-B}$ qui se déforme. La solution A, appelée liquide porté, est un film mince de faible viscosité. Des épaisseurs de film comprises entre 5 et 200 microns ont donné les meilleurs résultats. Comme liquide I particulièrement approprié, on peut citer les huiles de silicone ayant une viscosité comprise entre 0,5 et 100 centistockes. Ce liquide I est mélangé avec un aromatique-liquide II, comme par exemple le mono-bromonaphtalène.

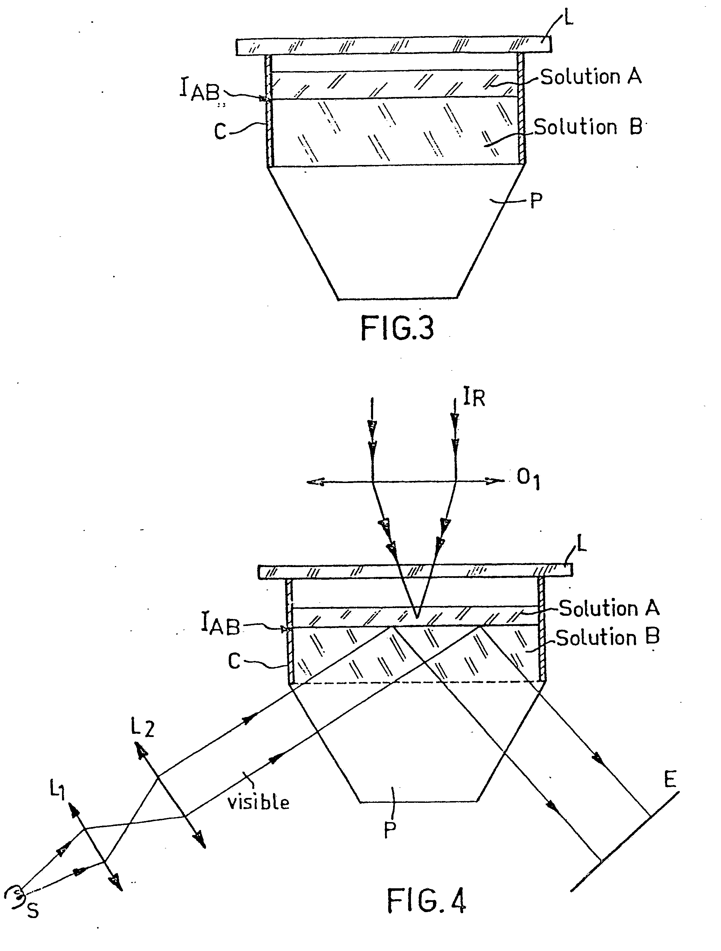

La figure 3 représente une vue détaillée du récepteur infrarouge avec une solution B d'indice supérieur à la solution A, c'est-à-dire opérant en réflexion totale. On dépose sur une des faces d'un prisme P un mélange préalablement saturé de deux liquides. L'indice du prisme est proche de celui du liquide porteur, c'est-à-dire de la solution saturée B, de sorte que, pour des rayons lumineux entrant dans le prisme, ils ne voient qu'un seul dioptre: l'interface liquide-liquide $I_{A-B}$. La cuve C, qui contient les deux liquides et qui est portée par une des faces du prisme, est fermée par une lame L transparente au

6

rayonnement infrarouge, qui permet d'éviter l'évaporation des liquides et leur pollution.

La figure 4 est une vue d'ensemble du transformateur d'images infrarouges selon l'invention opérant en réflexion totale, c'est-à-dire utilisant le récepteur infrarouge de la figure 3. Ce transformateur comprend une optique infrarouge $O_1$ qui focalise le rayonnement à transformer, émanant d'une source infrarouge non représentée, sur la surface libre de la solution A. On crée ainsi sur cette surface libre une image infrarouge qui est transformée en image thermique, par absorption du rayonnement infrarouge, ce qui provoque une déformation de l'interface liquide-liquide $I_{AB}$. On dispose de l'autre côté de cette interface liquide-liquide une source S mono- ou polychromatique émettant un faisceau de lumière rendu parallèle après traversée de deux lentilles $L_1$ et $L_2$. Ce faisceau de lumière parallèle se réfléchit totalement sur l'interface déformée. On observe la déformation de ladite interface par la variation d'intensité du faisceau réfléchi sur un écran E placé juste après le prisme P.

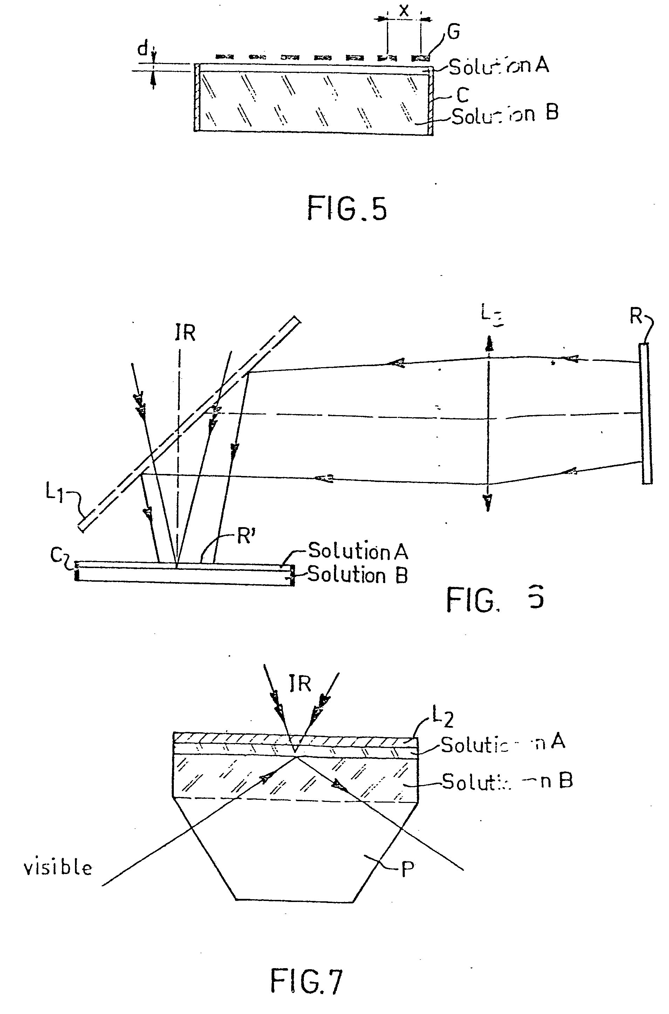

La figure 5 représente un autre mode de réalisation du récepteur. On dispose dans la cuve C une solution saturée A à deux constituants, portée par une solution B à deux constituants, Ces solutions résultent de la combinaison de deux liquides I et II. On dispose au-dessus de la solution A une grille par exemple métallique G, dont le pas $x$ est tel que le rapport $x/d$ soit compris entre 10 et 20 (d'étant l'épaisseur de la couche de solution A).

Au lieu de disposer la grille G au-dessus de la solution A, il est également possible de la disposer au niveau de l'interface entre la solution A et la solution B (non représenté). Avec ce récepteur, on peut aussi bien opérer en transmission qu'en réflexion totale.

Si on opère en réflexion totale, on dispose un prisme sous la solution B (comme sur la figure 3).

La figure 6 représente un troisième mode de réalisation du récepteur utilisable dans le transformateur selon l'invention. On forme, à l'aide d'un rayonnement absorbé par la solution A, l'image R' du réseau R à l'aide de la lentille $L_3$ et de la lame $L_1$ transparente dans l'infrarouge et réfléchissante pour le rayonnement qui éclaire R. On projette d'autre part simultanément sur le récepteur le rayonnement infrarouge.

Le dispositif permet de multiplier par 2 la sensibilité par rapport au récepteur de la figure 5.

Le pas du réseau R utilisé est tel que le rapport du pas du réseau à l'épaisseur de la solution A est compris entre 10 et 20.

La figure 7 représente un quatrième mode de réalisation du récepteur avec lequel on opère en réflexion totale. On réalise un récepteur bloqué en déposant sur le système diphasé, solution A- solution B, une lame $L_2$ transparente à l'infrarouge. Sous le système diphasé se trouve un prisme P d'indice sensiblement égal à celui de la solution B.

Ce récepteur peut être utilisé en transmission en supprimant le prisme P.

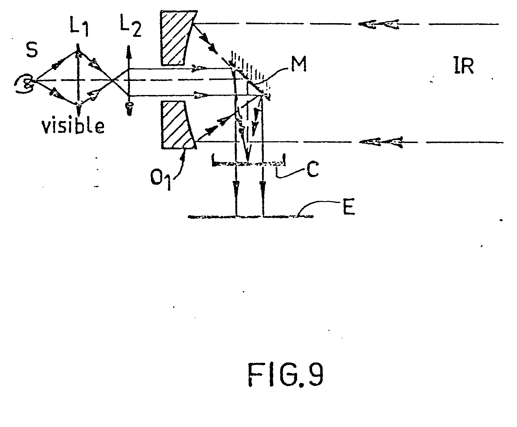

La figure 8 représente un dernier mode de réalisation du récepteur. On dispose, comme pour la figure 7, d'une lame $L_2$ et d'un prisme P, mais le système liquide n'est plus diphasé mais triphasé. On dispose de trois solutions A, B et C. Le liquide B absorbe l'infrarouge; par contre le liquide A le laisse passer. La tension interfaciale entre les liquides B et C est très faible et la variation thermique de la tension superficielle de l'interface entre les liquides A et B est importante. On détecte l'image thermique par la déviation des rayons réfléchis sur l'interface mobile entre B et C.

L'intérêt de ce système, comme celui de la figure 7, est d'avoir un récepteur bloqué, d'emploi plus commode.

On peut utiliser ce récepteur en transmission en supprimant le prisme P.

La figure 9 représente le transformateur d'images selon l'invention opérant en transmission normale. Ce transformateur comprend une optique infrarouge $O_1$, qui focalise le rayonnement à transformer, émanant d'une source d'infrarouge non représentée, sur la surface libre de la solution A contenue dans la cuve C. On crée ainsi sur cette surface libre une image infrarouge qui est transformée en image thermique, par absorption du rayonnement infrarouge, ce qui provoque une déformation de l'interface liquide-liquide. On dispose du même côté de cette interface liquide-liquide une source S mono- ou polychromatique émettant un faisceau de lumière rendu parallèle après traversée de deux lentilles $L_1$ et $L_2$. Ce faisceau de lumière parallèle se réfléchit totalement sur le miroir M et traverse le récepteur noté C. On observe la déformation de ladite interface par la variation d'intensité du faisceau transmis sur en écran E placé juste après le récepteur.

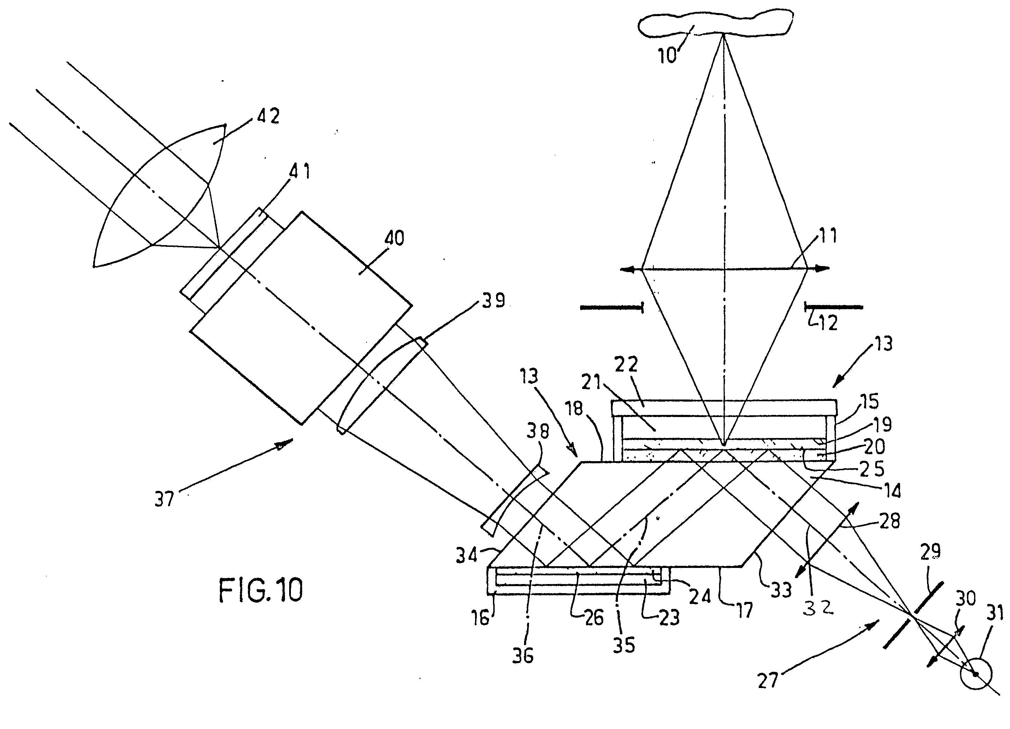

Une réalisation particulière et préférée du transformateur selon l'invention, est schématiquement représentée à la figure 10 des dessins annexés. Un tel dispositif a été réalisé par la Société d'Optique, Précision, Electronique et Mécanique (SOPELEM), 102 rue Chaptal. Levallois-Perret, France.

Le transformateur d'images infrarouges schématiquement représenté à la figure 10 est un dispositif compact aisément transportable, permettant de transformer en images visibles les radiations infrarouges émises par l'objet 10 à étudier.

Le dispositif comprend d'abord des moyens de réception infrarouges qui sont, dans le sens desdites radiations, un objectif 11 infrarouge, un diaphragme 12 et une cellule sensible désignée par la référence générale 13.

L'objectif 11 est en germanium, et est calculé pour la longueur d'onde de 10 $\mu$m. Sa focale est de 75 mm, son ouverture de f/2, son champ de 25 mm. Le diaphragme 12 est un diaphragme à iris.

La cellule 13 se compose d'un rhomboèdre de verre 14 et de deux cuves 15 et 16, respectivement scéllées sur deux faces parallèles 17 et 18 du rhomboèdre. La cuve 15 reçoit les liquides 19 et 20 qui, selon l'invention, sont partiellement miscibles à la température et à la pression de fonctionnement. Au dessus du liquide 19 est prévu un gaz inerte 21, tel que l'azote sec. La paroi 22 de la cuve 15 tournée vers l'objectif 11 est transparente et est constituée d'une fenêtre de germanium. Il va sans dire que la cuve comporte des moyens (non représentés) pour assurer son étanchéité aux gaz et aux liquides. Le liquide 19 a une épaisseur de l'ordre de 100 $\mu$m, le liquide 20 de l'ordre de 1 mm. La cuve 16 contient essentiellement un bain de mercure 23 séparé de la face 17 adjacente du rhomboèdre 14 par un liquide 24 d'indice identique à celui du verre du rhomboèdre. Les liquides 19 et 20 forment entre eux une interface active 25, et les liquides 23 et 24 forment entre eux une interface 26 dite de compensation. Les dimensions des interfaces 25 et 26 sont de l'ordre de 40 mm × 40 mm, leur zone utile étant réduite à 25 mm × 25 mm environ.

Le pouvoir séparateur de l'objectif infrarouge 11 ne doit pas affecter la qualité de l'image donnée pour l'interface 25. Celle-ci a un pouvoir séparateur de 5 traits par millimètre sur tout le champ.

Dans la disposition représentée à la figure 10, l'objectif 11 est monté verticalement au dessus de l'interface 25. On peut, bien entendu, régler la mise au point de l'objectif 11 et le diamètre du diaphragme 12. La mise au point est réglable de 1 mètre à l'infini. Le diaphragme est réglable de f/2 à f/22. Ces réglages sont réalisés d'une manière bien connue de l'homme de l'art, au moyen de bagues montées sur l'objectif 11.

Dans une forme de réalisation perfectionnée, l'objectif 11 peut être surmonté par un miroir de renvoi (non représenté). Ce miroir est alors articulé pour se déplacer en site, par exemple entre 35° et 55°. Le miroir est solidaire de l'objectif et l'ensemble objectif-miroir constitue un module. La commande de site peut se faire sur le support commun à l'objectif et au miroir.

Par ailleurs, le dispositif comprend un collimateur désigné par la référence générale 27. Il est constitué d'un objectif 28, d'un diaphragme 29, d'un condenseur 30 et d'une source lumineuse 31. La source 31 est une lampe à vapeur de mercure genre HBO 50 W/3 refroidie par une circulation libre d'air. Le diaphragme 29 est un trou circulaire de diamètre 50 $\mu$m placé au foyer de l'objectif 28. Le condenseur 30, de diamètre 15 mm et de focale 15 mm conjugue la source 31 et le diaphragme 29. Un filtre anticalorique (non représenté) peut être placé entre la lampe 31 et le condenseur 30, le plus près possible du condenseur. L'objectif 28 possède une focale de 105 mm et une ouverture relative de f/4 (Ø utile = 25 mm). La tache de diffusion au centre du champ est de 0,5 mrd. Son champ est de 5 mrd. Il est corrigé pour l'infini et traité pour le visible.

La face 33 du rhomboèdre tournée vers le collimateur 27 est perpendiculaire au rayon moyen 32 émis par celui-ci. La face 33 est avantageusement traitée par une couche antireflet dans le visible.

La disposition du collimateur 27, par rapport à la cellule sensible 13, est telle que le faisceau de rayons visibles parallèles (matérialisé par le rayon moyen 32) se réfléchit totalement sur l'interface active 25. L'angle de réflexion choisi est égal à 60°. Le faisceau réfléchi (35) par l'interface 25 se réfléchit à son tour (36) sur l'interface 26 de compensation. Ce faisceau réfléchi 36 traverse perpendiculairement la face 34 du rhomboèdre. Cette face 34 est également traitée par une couche antireflet dans le visible.

Le faisceau 36 sortant du rhomboèdre 14 est ensuite traité ou visualisé dans un montage qui sera maintenant décrit. Le montage choisi, désigné par la référence générale 37, constitue des moyens de visualisation. Il comprend essentiellement un ensemble afocal composé de deux lentilles cylindriques 38 et 39. La lentille divergente 38, de 10 dioptries (f = 100 mm) présente une zone utile de 13 mm × 25 mm. La lentille convergente 39, de 5 dioptries (f = 200 mm) possède un diamètre de 25 mm. Dans le sens des rayons 36, les moyens de visualisation comprennent ensuite un prisme de Porro 40. Ce prisme est composé de 4 miroirs montés selon deux dièdres perpendiculaires. Le premier dièdre est fixe, et le deuxième dièdre est mobile sur une courte distance (par exemple 10 cm) parallèlement au rayon moyen incident.

Le faisceau de rayons visibles sortant du prisme de Porro 40 est reçu par un écran 41. Cet écran est, par exemple, constitué d'un verre dépoli sur une face, la face dépolie étant tournée vers la lentille bioculaire 42. Cette lentille présente une focale de 80 mm, l'écran étant placé à 75 mm de son plan principal, ce qui fournit finalement une image virtuelle à 1 mètre de l'écran.

Le dispositif schématiquement représenté à la figure 10 et décrit ci-dessus fonctionne comme suit. Les radiations infrarouges émises par l'objet 10 sont focalisées dans l'objectif 11 pour former une image infrarouge sur le liquide 19 le moins dense. Celui-ci est alors chauffé par endroits selon un motif correspondant à l'image de l'objet 10. Etant donné que la tension superficielle entre les liquides 19 et 20 contenus dans la première cuve 15 varie avec la température, l'interface 25, entre les liquides 19 et 20, se déforme et peut servir à son tour d'objet.

Le collimateur 27 éclaire l'interface-objet 25 en lumière parallèle visible avec un angle d'incidence tel que la réflexion sur l'interface 25 est totale (angle de réflexion égal à 60°). Le faisceau réfléchi par l'interface 25 traverse le rhomboèdre 14. Il se réfléchit à son tour sur la couche de mercure 23 (interface de compensation 26) contenue dans la deuxième cuve 16. Ce faisceau contient une image visible qui correspond à la déformation de l'interface 25. Mais l'observation directe de cette image n'est pas possible, car elle apparaît à l'envers et anamorphosée. Le faisceau réfléchi 36 est alors traité par l'ensemble afocal (lentilles 38—39) de grandissement égal à 2, et par le prisme de Porro 40, qui redresse l'image. L'image se forme sur le verre dépoli 41 qui est observé à travers la lentille bi-oculaire 42.

# 0 010 031

Grâce au montage du dispositif représenté à la figure 10, la surface libre 23 du mercure reste toujours parallèle à l'interface active 25, jouant ainsi un rôle de compensation. Un faisceau parallèle issu de collimateur 27 traverse la cellule sensible 13 en conservant en moyenne sa direction initiale. L'ensemble constitué par le collimateur 27 et les moyens de visualisation 37 reste ainsi dans une position fixe par rapport à la cellule sensible 13. Un tel montage permet de compenser les changements d'orientation du dispositif, et évite les réglages optiques après déplacement, même si la cellule sensible n'est pas maintenue horizontale.

La suite de la description va être faite en référence à des exemples de réalisation pratique de combinaison de deux liquides I et II.

### Exemple I

Le liquide I est une huile aux silicones (mélange de polydiméthylsiloxanes) et le liquide II est le mono-bromonaphtalène.

Les caractéristiques physiques des liquides purs sont indiquées dans le tableau ci-dessous:

| | Mono-bromonaphtalène | Huile aux silicones |
|---|---|---|
| Tension superficielle du liquide pur avec l'air à 20°C | 37,5 dyne/cm | 18,5 dyne/cm |
| densité à 20°C | 1,48 g/cm³ | 0,9 g/cm³ |
| Indice de réfraction pour la raie D de sodium à 20°C | 1,658 | 1,396 |
| Viscosité cinématique | 3,56 × 10⁻² stoke | 2,83 × 10⁻² stoke |
| Conductivité thermique | | 3 × 10⁻⁴ W/cm, °C |
| Chaleur spécifique | | 0,33 cal/g °C |
| Diffusivité thermique | | 10⁻³ cm²/sec. |

Les caractéristiques physiques du système sont les suivantes:
— tension superficielle du mono-bromonaphtalène saturé d'huile aux silicones avec l'air: 21,5 dynes/cm à 20°C;
— tension superficielle de l'huile aux silicones saturée de monobromonaphtalène avec l'air: 19,6 dynes/cm à 20°C;
— tension superficielle de la surface de séparation entre les deux solutions mutuellement saturées: 0,8 dyne/cm à 20°C;
— viscosité cinématique à 20°C du mono-bromonaphtalène saturé en huile: $3,55.10^{-2}$ stoke;
— viscosité cinématique à 20°C de l'huile saturée de mono-bromonaphtalène: $2,77.10^{-2}$ stoke.

On voit que l'association de ces deux liquides permet d'obtenir une interface de très faible tension superficielle, susceptible par conséquent de se déformer facilement.

L'expression

$$\frac{1}{\alpha_{AB}} \cdot \frac{d\alpha_A}{dT}$$

peut être utilisée comme critère de sensibilité du transformateur selon la présente invention, $\alpha_A$

9

désignant la tension superficielle de la solution A saturée avec l'air, et $\alpha_{AB}$ désignant la tension superficielle de l'interface $I_{A-B}$.

En effet,

$$\frac{d\alpha_A}{dT}$$

représente l'effet thermique qui déstabilise la solution saturée A et y engendre des mouvements de convention.

C'est l'effet moteur; et

$$\frac{1}{\alpha_{AB}}$$

représente l'effet mécanique de l'instabilité précitée qui agit sur l'interface liquide-liquide et la déforme.

C'est l'effet cherché.

Si on suppose que la déformation de l'interface liquide-liquide est faible par rapport à l'épaisseur de la solution A, ce qui est le cas dans la pratique, on a trouvé que, pour une sensibilité donnée.

$$\frac{1}{\alpha_{AB}} \quad \frac{d\alpha_A}{dT}$$

la déflexion de l'interface est inversement proportionelle à l'épaisseur de la solution A. D'autre part, on ne peut pas diminuer indéfiniment l'épaisseur de la solution A; la déformation de l'interface doit suivre les variations en température dans la solution A avec une constante de temps faible. L'épaisseur de la solution saturée A a donc ainsi une valeur minimale qui, compte tenu de la sensibilité thermique demandée et de la résolution spatiale voulue, doit être convenablement choisie en fonction des paramètres des matériaux. Dans une réalisation pratique, une constante de temps de l'ordre de 1/10 de seconde a été obtenue avec une épaisseur de la solution A d'enriron 100 microns.

Exemple II

Cet exemple concerne d'autres liquides I et II utilisables, ainsi que des combinations de tels liquides.

1) *liquide II: mono-bromonaphtalène*
(n = 1,66 d = 1,48)

liquide I:      acide acétique          TCS 42°C

                   méthanol              TCS 62°C

                   acide phénylacétique        TCS 55°C

2) *liquide II: tétrachlorure de carbone* $CCl_4$ (n = 1,46)
(d = 1,60)

liquide I:      acide acétique          TCS 25°C

                   acide butyrique        TCS 25°C

                   di-phénylamine         TCS 28°C

                   acide propionique      TCS 25°C

                   p-nitrochlorobenzène      TCS 50°C

3) *liquide II: sulfure de carbone* $CS_2$
(n = 1,628 d = 1,30

liquide I:      anhydride acétique      TCS 30°C

                   acétonitrile            TCS 51,5°C

**0 010 031**

| | | |
|---|---|---|
| | acide butyrique | TCS 25°C |
| | camphre | TCS 25°C |
| | acide formique | TCS 43°C |
| | méthanol | TCS 36°C |
| | p-nitrochlorobenzène | TCS 50°C |
| | acide propionique | TCS 25°C |

4) *liquide II: iodure de méthylène* $CH_2I_2$
(n = 1,742)

| | | |
|---|---|---|
| Liquide I: | cyclopentane | TCS 30,5°C |
| | méthylcyclopentane | TCS 44°C |
| | cyclohexane | TCS 31°C |
| | méthylcyclohexane | TCS 45°C |
| | acide acétique | TCS 45°C |

(TCS: Température Critique de Solution)
(n = indice de réfraction pour la raie D du sodium à 20°C)
(d = densité à 20°C).

## Revendications

1. Procédé pour la transformation d'images thermiques en images visibles, notamment en vue de l'observation d'un objet émettant des radiations infrarouges, dans lequel on forme une image thermique, notamment celle dudit objet, sur une face d'un dioptre plan qui est recouverte d'au moins une couche de matière liquide absorbant les radiations électromagnétiques, la répartition des températures dans cette image thermique se traduisant alors par une variation des paramètres physiques de ladite couche, on éclaire l'autre face dudit dioptre, qui est réfléchissante ou transmettrice, par un faisceau de rayons lumineux parallèles dont les caractéristiques optiques subissent, lors de la réflexion ou de la transmission par le dioptre plan, une variation correspondante de ses caractéristiques optiques, et on forme dans un plan d'observation une image secondaire observable mettant en évidence cette dernière variation, ledit procédé étant caractérisé en ce qu'on effectue la réflexion ou la transmission du faisceau de rayons lumineux parallèles sur un dioptre plan constitué par une interface liquide-liquide de faible tension superficielle obtenue par mélange de deux liquides partiellement miscibles à température et pression de fonctionnement.

2. Procédé selon la revendication 1, caractérisé en ce qu'on dispose, au voisinage de la surface libre du liquide absorbant les radiations thermiques, une grille où l'on forme au voisinage de ladite surface l'image d'un réseau.

3. Procédé selon l'une des revendications 1 ou 2, caractérisé en ce que le faisceau de rayons lumineux parallèles ou issu d'une source ponctuelle provient d'une source émettant une lumière visible.

4. Transformateur pour la mise en oeuvre du procédé selon l'une des revendications 1 à 3, comportant un système d'éclairage donnant un faisceau de rayons lumineux parallèles ou un faisceau issu d'une source ponctuelle (31, 27), un dioptre plan réfléchissant ou transmettant le faisceau (13), un dispositif optique adapté notamment aux radiations infrarouges (11, 12), et un système d'observation (37, 41), le dioptre réfléchissant ou transmetteur étant recouvert d'au moins une couche (19) de matière liquide absorbant les radiations thermiques sur laquelle ledit dispositif optique forme une image thermique d'un objet (10) émettant des radiations électromagnétiques, la répartition des températures dans cette image se traduisant par une variation des paramètres physiques de ladite couche, ledit faisceau réfléchi ou transmis (32, 35, 36) subissant alors une variation correspondante de ses caractéristiques optiques, cette variation étant mise en évidence par ledit système d'observation, ledit transformateur étant caractérisé en ce que le dioptre plan est constitué par une interface liquide-liquide (19, 20) de faible tension superficielle obtenue par mélange de deux liquides partiellement miscibles à la température et sous la pression d'utilisation.

5. Transformateur selon la revendication 4, caractérisé en ce qu'il comprend en outre une grille située au voisinage de la surface libre du liquide obsorbant les radiations thermiques ou un réseau dont on forme l'image au voisinage de ladite surface libre.

11

6. Transformateur selon la revendication 4, caractérisé en ce qu'il comprend en outre une lame transparente à l'infrarouge disposée au voisinage de la surface libre du liquide absorbant les radiations thermiques.

7. Transformateur selon l'une quelconque des revendications 4 à 6, caractérisé en ce que le dioptre réfléchissant ou transmetteur est recouvert de deux couches de matière liquide, l'une des couches absorbant les radiations thermiques.

8. Transformateur selon l'une quelconque des revendications 4 à 7, caractérisé en ce que le dioptre plan est constitué par une interface liquide porteur-liquide porté, le liquide porté étant saturé en liquide porteur à la température ambiante et sous pression normale, ledit liquide porté absorbant le proche infrarouge ayant une viscosité comprise entre 0,5 et 100 centistokes à température ambiante, ayant une faible conductivité thermique, ayant une tension interfaciale avec le liquide porteur de l'ordre de $\alpha_{AB} = 1$ dyne/cm ou moins à la température ambiante, et formant une couche ayant une épaisseur comprise entre 5 et 300 microns, tandis que le liquide porteur, saturé en liquide porté, possède une viscosité de l'ordre du centistoke ou plus à la température ambiante.

9. Transformateur selon la revendication 8, caractérisé en ce que le liquide porté absorbe le rayonnement infrarouge dans la bande spectrale 8 à 12 microns ou 3 à 5 microns.

10. Transformateur selon l'une quelconque des revendications 4 à 9, caractérisé en ce que le liquide porté est choisi parmi les polysiloxanes substitués, les huiles aux silicones, l'acide acétique, le méthanol, l'acide phénylacétique, l'acide butyrique, la diphénylamine, l'acide propionique, le p-nitrochlorobenzène, l'anhydride acétique, l'acétonitrile, la camphre, l'acide formique, le cyclopentane, le méthylcyclopentane, le cyclohexane et le méthylcyclohexane, et le liquide porteur est choisi parmi le mono-bromonaphtalène, le tétrachlorure de carbone, le sulfure de carbone et l'iodure de méthylène.

11. Transformateur selon l'une quelconque des revendications 4 à 10 avec lequel on opère en réflexion totale, caractérisé en ce qu'il comprend en outre un prisme supportant les liquides, l'indice de réfraction du liquide porteur étant supérieure et très différent de celui du liquide porté et égal ou sensiblement égal à celui du prisme.

12. Transformateur selon l'une quelconque des revendications 4 à 10 avec lequel on opère en transmission ou réflexion partielle, caractérisé en ce que les indices de réfraction des liquides porté et porteur sont différents.

13. Transformateur selon l'une quelconque des revendications 4 à 12, caractérisé en ce que le système d'éclairage est constitué par une source cohérente ou incohérente mono ou polychromatique, notamment une source visible.

14. Transformateur selon l'une quelconque des revendications 4 à 13, caractérisé en ce que le dispositif optique infrarouge est un objectif dioptrique, catadioptrique ou catoptrique.

15. Transformateur selon l'une quelconque des revendications 4 à 14, caractérisé en ce que le système d'observation est constitué par un écran ou par un système de détection utilisant les méthodes du type strioscopie, strioscopie interférentielle, contraste de phase ou holographie.

16. Transformateur selon la revendication 15, caractérisé en ce que l'écran est placé au voisinage de l'interface liquide-liquide.

17. Transformateur selon l'une quelconque des revendications 4 à 11 et 13 à 16, caractérisé en ce que le système d'observation est constitué par un écran disposé directement à la sortie du prisme.

18. Transformateur pour la mise en oeuvre du procédé selon l'une quelconque des revendications 1 à 3 comprenant des moyens pour recevoir les radiations infrarouges émises par l'objet à étudier, lesdits moyens comprenant une cellule sensible aux rayons infrarouges, des moyens pour éclairer ladite cellule sensible et des moyens pour traiter ou visualiser les rayons lumineux sortant de ladite cellule, ledit transformateur étant caractérisé en ce que la cellule sensible comprend une première cuve contenant deux liquides partiellement miscibles à la témperature et à la pression de fonctionnement et formant ainsi une interface liquide-liquide de faible tension superficielle, dénommée interface active, une face de ladite première cuve tournée vers ledit objet étant perméable aux rayons infrarouges, une deuxième cuve contenant une autre interface liquide-liquide, dite de compensation, lquelle reste sensiblement parallèle à l'interface active, la disposition étant telle que les radiations infrarouges émises par l'objet sont focalisées sur le liquide le moins dense contenu dans la première cuve, que les moyens pour éclairer la cellule produisent un faisceau de rayons lumineux parallèles éclairant l'interface active avec un angle d'incidence tel que leur réflexion sur celle-ci soit sensiblement totale, lesdits rayons réfléchis sur l'interface active venant à leur tour se réfléchir sur l'interface de compensation en formant un faisceau de rayons capables d'être visualisés dans les moyens de traitement et que le faisceau lumineux parallèle éclairant le cellule sensible traverse ladite cellule sans modification sensible de sa direction, quelle que soit la position dans l'espace du transformateur.

19. Transformateur selon la revendication 18, caractérisé en ce que la cellule sensible est essentiellement constituée de deux cuves accolées à deux faces parallèles d'un rhomboèdre, la première cuve comprenant l'interface active sensible aux rayons infrarouges, la face de la première cuve opposée au rhomboèdre et tournée vers l'objet à étudier comprenant une fenêtre transparente aux infrarouges, telle qu'une fenêtre en germanium, un gaz inerte tel que l'azote étant interposé dans la zone libre de la première cuve entre la couche liquide et la fenêtre, la deuxième cuve contenant essentiellement un bain de mercure et un liquide d'indice identique à celui du verre du rhomboèdre,

12

**0010031**

lequel liquide est disposé entre le bain de mercure et la face adjacente du rhomboèdre.

20. Transformateur selon la revendication 19, caractérisé en ce que les faces libres du rhomboèdre sont perpendiculaires aux rayons moyens du faisceau lumineux éclairant la cellule.

21. Transformateur selon l'une des revendications 19 ou 20, caractérisé en ce que l'angle de réflexion du faisceau lumineux sur l'interface active est avantageusement de 60°.

22. Transformateur selon l'une quelconque des revendications 18 à 21, caractérisé en ce que les moyens pour recevoir les radiations infrarouges comprennant dans le sens desdites radiations, un objectif et un diaphragme, par exemple un diaphragme à iris, permettant de focaliser lesdites radiations sur le liquide le moins dense contenu dans la première cuve de la cellule sensible.

23. Transformateur selon l'une quelconque des revendications 18 à 22, caractérisé en ce que les moyens pour éclairer la cellule sensible sont constitués d'un collimateur comprenant une source lumineuse émettant dans le visible, d'un condenseur, d'un diaphragme et d'un objectif, ce qui permet d'obtenir un faisceau de rayons lumineux parallèles.

24. Transformateur selon l'une quelconque des revendications 18 à 23, caractérisé en ce que les moyens pour traiter et visualiser les rayons lumineux sortant de la cellule comprennent un ensemble afocal constitué de deux lentilles cylindriques, un prisme de Porro, un verre dépoli et une lentille bi-oculaire.

25. Utilisation du transformateur selon l'une quelconque des revendications 4 à 24 pour rendre visibles les corps au moyen de leur rayonnement calorifique situé dans l'infrarouge et pour la mesure de gradients superficiels de température des corps.

**Patentansprüche**

1. Verfahren zur Umwandlung thermischer Bilder in sichtbare Bilder, insbesondere zum Zweck der Beobachtung eines Objekts, das infrarote Strahlen aussendet, wobei ein thermisches Bild, insbesondere dieses Objekts auf einer Seite einer ebenen Grenzfläche, die mit mindestens einer Schicht eines flüssigen, elektromagnetische Strahlen absorbierenden Materials bedeckt ist, gebildet wird und die Temperaturverteilung in diesem thermischen Bild Änderungen der physikalischen Parameter in der genannten Schicht bewirkt und man die andere Seite der genannten Grenzfläche, die reflektierend oder lichtdurchlässig ist, durch ein Bündel paralleler Lichtstrahlen beleuchtet, deren optische Charakteristiken während der Reflexion bzw. dem Durchgang durch die ebene Grenzfläche einer deren optischen Charakteristiken entsprechenden Änderung unterliegen und auf einem Beobachtungsschirm ein sekundäres, sichtbares Bild gebildet wird, das die letztere Änderung augenscheinlich macht, dadurch gekennzeichnet, daß man die Reflexion oder den Durchgang des Bündels der parallelen Lichtstrahlen an einer ebenen Grenzfläche (Diopter) stattfinden läßt, die durch eine Flüssig-Flüssig-Zwischenfläche von niedriger Oberflächenspannung gebildet ist und durch ein Gemisch von zwei bei Umgebungstemperatur und Arbeitsdruck partiell mischbaren Flüssigkeiten hergestellt wird.

2. Verfahren nach Anspruch 1, dadurch gekennzeichnet, daß man in Nähe der freien Oberfläche der die thermischen Strahlen absorbierenden Flüssigkeit ein Gitter anordnet oder das Bild eines Netzes bzw. Rasters gestaltet.

3. Verfahren nach Anspruch 1 oder 2, dadurch gekennzeichnet, daß das Bündel der parallelen oder von einer Punktquelle ausgehenden Lichtstrahlen einer Quelle entstammt, die sichtbares Licht aussendet.

4. Umwandler zur Durchführung des Verfahrens nach einem der Ansprüche 1 bis 3, bestehend aus einem Beleuchtungssystem, das ein Bündel paralleler Lichtstrahlen oder ein Bündle Lichtstrahlen aus einer Punktquelle (31, 27) liefert, aus einer das Lichtbündel (13) reflektierenden oder durchlassenden ebenen Grenzfläche, aus einer für infrarote Strahlen eingerichteten optischen Vorrichtung (11, 12) und aus einem Beobachtungssystem (37, 41), wobei die reflektierende oder durchlassende Grenzfläche mit mindestens einer Schicht (19) aus einem flüssigen, thermische Strahlen absorbierenden Material bedeckt ist und die optische Vorrichtung auf dieser Schicht ein thermisches Bild eines elektromagnetische Strahlen aussendenden Objekts (10) ausbildet und die Temperaturverteilung in diesem Bild sich in eine Änderung der physikalischen Parameter der genannten Schicht überträgt, wodurch das reflektierte oder durchgehende Lichtbündel (32, 35, 36) eine seinen optischen Charakteristiken entsprechende Änderung erfährt, und diese Änderungen durch das Beobachtungssystem augenscheinlich gemacht werden, dadurch gekennzeichnet, daß die ebene Grenzfläche aus einer Flüssig-Flüssig-Zwischenfläche (19, 20) von niedriger Oberflächenspannung besteht, die durch Mischung von zwei bei Gebrauchstemperatur und -druck partiell mischbaren Flüssigkeiten hergestellt ist.

5. Umwandler nach Anspruch 4, gekennzeichnet durch ein Gitter (G, Fig. 5) in Nähe der freien Oberfläche der die thermischen Strahlen absorbierenden Flüssigkeit oder ein Netz, von dem in Nähe der genannten freien Oberfläche ein Abbild gemacht wird (R', Fig. 6).

6. Umwandler nach Anspruch 4, gekennzeichnet durch eine dünne Platte (L, Fig. 3), die für infrarote Strahlen durchlässig ist und in Nähe der freien Oberfläche der die thermischen Strahlen absorbierenden Flüssigkeit angeordnet ist.

7. Umwandler nach einem der Ansprüche 4 bis 6, dadurch gekennzeichnet, daß die reflektierende oder durchlässige Grenzfläche von zwei Schichten aus flüssigem Material bedeckt ist, von denen die

13

**0010031**

eine die thermischen Strahlen absorbiert.

8. Umwandler nach einem der Ansprüche 4 bis 7, dadurch gekennzeichnet, daß die ebene Grenzfläche aus einer Flüssig-Flüssig-Zwischenfläche zwischen einer tragenden und getragenen Flüssigkeit besteht, wobei die getragene Flüssigkeit (A) mit der tragenden Flüssigkeit (B) bei Umgebungstemperatur und normalem Druck gesättigt ist und die getragene, das nahe Infrarot absorbierende Flüssigkeit eine Viskosität zwischen 0,5 und 100 Centistokes bei Umgebungstemperatur sowie eine geringe thermische Leitfähigkeit aufweist und eine Zwischenflächenspannung in der Größenordnung von $\alpha_{AB} = 2$ dyn/cm oder weniger bei Umgebungstemperatur hat und eine Schicht von 5 bis 300 Mikron bildet, während die tragende und mit der getragenen gesättigte Flüssigkeit eine Viskosität in der Größenordnung des Centistokes oder mehr bei Umgebungstemperatur aufweist.

9. Umwandler nach Anspruch 8, gekennzeichnet durch eine getragene Flüssigkeit (A), die Infrarotstrahlen in der Spektralbande von 8 bis 12 Mikron oder 3 bis 5 Mikron absorbiert.

10. Umwandler nach einem der Ansprüche 4 bis 9, gekennzeichnet durch eine getragene Flüssigkeit (A) bestehend aus: substituierten Polysiloxanen, Siliconölen, Essigsäure, Methanol, Phenylessigsäure, Buttersäure, Diphenylamin, Propionsäure, p-Nitrochlorbenzol, Acetanhydrid, Acetonitril, Campher, Ameisensäure, Cyclopentan, Methylcyclopentan, Cyclohexan oder Methylcyclohexan und eine tragende Flüssigkeit (B) bestehend aus: Monobromnaphtalin, Tetrachlorkohlenstoff, Schwefelkohlenstoff oder Methylenjodid.

11. Umwandler nach einem der Ansprüche 4 bis 10 zum Arbeiten mit Totalreflexion, dadurch gekennzeichnet, daß die Flüssigkeiten auf einem Prisma (P) angeordnet sind und der Refraktionsindex der tragenden Flüssigkeit (B) höher und sehr verschieden von dem der getragenen Flüssigkeit (A) sowie gleich oder etwa gleich dem des Prismas ist.

12. Umwandler nach einem der Ansprüche 4 bis 10 zum Arbeiten mit Transmission oder partieller Reflexion, dadurch gekennzeichnet, daß die Refraktionindices der getragenen und der tragenden Flüssigkeit verschieden sind.

13. Umwandler nach einem der Ansprüche 4 bis 12, dadurch gekennzeichnet, daß das Beleuchtungssystem eine Quelle für kohärente oder inkohärente mono- oder polychromatische Strahlen, insbesondere sichtbare Strahlen aufweist.

14. Umwandler nach einem der Ansprüche 4 bis 13, dadurch gekennzeichnet, daß die Infrarotoptik ein dioptrisches, katadioptrisches oder katoptrisches Objektiv ist.

15. Umwandler nach einem der Ansprüche 4 bis 14, gekennzeichnet durch ein Beobachtungssystem, bestehend aus einem Bildschirm oder einem Anzeigesystem nach den Methoden der Strioskopie, der Interferenzstrioskopie, des Phasenkonstrastes oder der Holographie.

16. Umwandler nach Anspruch 15, dadurch gekennzeichnet, daß der Bildschirm in Nähe der Flüssig-Flüssig-Zwischenfläche angeordnet ist.

17. Umwandler nach einem der Ansprüche 4 bis 11 und 13 bis 16, dadurch gekennzeichnet, daß das Beobachtungssystem aus einem Bildschirm besteht, der direkt am Ausgang des Prismas angeordnet ist.

18. Umwandler zur Durchführung des Verfahrens nach einem der Ansprüche 1 bis 3, enthaltend Mittel zur Aufnahme der von dem zu untersuchenden Objekt ausgesandten infraroten Strahlen, wobei diese Mittel bestehen aus einer für infrarote Strahlen empfindlichen Zelle, aus Mitteln zur Beleuchtung dieser empfindlichen Zelle und aus Mitteln zur Behandlung oder Sichtbarmachung der aus der Zelle austretenden Lichtstrahlen, gekennzeichnet durch eine empfindliche Zelle (13) mit einem ersten Trog (15), mit zwei bei Arbeitstemperatur und -druck partiell mischbaren und hierdurch eine Flüssig-Flüssig-Zwischenfläche von geringer Oberflächenspannung (im folgenden aktive Zwischenfläche (25) genannt) bildenden Flüssigkeiten (19, 20), wobei die zu dem Objekt gerichtete Seite des ersten Troges (15) für infrarote Strahlen durchlässig ist, durch einen zweiten Trog (16) mit einer weiteren Flüssig-Flüssig-Zwischenfläche (26) zur Kompensation, die parallel zur aktiven Zwischenfläche (25) ausgerichtet ist, und die Anordnung so getroffen ist, daß die vom Objekt ausgesandten infraroten Strahlen auf die Flüssigkeit geringerer Dichte in dem ersten Trog (15) fokussiert werden, weiter gekennzeichnet durch Mittel zur Beleuchtung der Zelle (13), die ein Bündel von parallelen Lichtstrahlen liefern, welche die aktive Zwischenfläche (25) in einem solchen Einfallwinkel beleuchten, daß Totalreflexion eintritt und die an der aktiven Zwischenfläche (25) reflektierten Strahlen an der Kompensations-Zwischenfläche (26) reflektiert werden und ein sichtbar zu machendes Strahlenbündel bilden, weiter gekennzeichnet durch eine solche Anordnung, daß das die empfindliche Zelle beleuchtende Bündel paralleler Lichtstrahlen diese Zelle ohne Richtungsänderung durchquert, wie auch immer die Stellung im Raum des Umwandlers ist.

19. Umwandler nach Anspruch 18, dadurch gekennzeichnet, daß die empfindliche Zelle (13) im wesentlichen aus zwei Trögen besteht, die an zwei parallelen Flächen eines Rhomboeders (14) angefügt sind, wobei der erste Trog (15) die für infrarote Strahlen empfindliche aktive Zwischenfläche (25) enthält und mit einem für Infrarot durchlässigem Fenster z.B. aus Germanium gegen das zu untersuchende Objekt gerichtet ist und der freie Raum zwischen der Flüssigkeit und dem Fenster (22) mit einem Inertgas (21), wie Stickstoff, gefüllt ist, während der zweite Trog (16) ein Quecksilberbad (23) und eine Flüssigkeit (24) von gleichem Index wie das Glas des Rhomboeders enthält und diese Flüssigkeit zwischen dem Quecksilberbad und der anliegenden Fläche des Rhomboeders

14

angeordnet ist.

20. Umwandler nach Anspruch 19, dadurch gekennzeichnet, daß die freien Flächen (33, 34) des Rhomboeders (14) rechtwinklig zu den mittleren Strahlen des die Zelle beleuchtenden Lichtbündels angeordnet sind.

21. Umwandler nach Anspruch 19 oder 20, dadurch gekennzeichnet, daß der Reflexionswinkel des Lichtbündles an der aktiven Zwischenfläche (25) vorteilhaft 60° beträgt.

22. Umwandler nach einem der Ansprüche 18 bis 21, dadurch gekennzeichnet, daß die Mittel zur Aufnahme der infraroten Strahlen in Strahlenrichtung ein Objektiv (11) und eine Blende (12) aufweisen, z.B. eine Irisblende, welche die Strahlen auf die Flüssigkeit geringerer Dichte in dem ersten Trog (15) der empfindlichen Zelle fokussiert.

23. Umwandler nach einem der Ansprüche 18 bis 22, gekennzeichnet durch Mittel zur Beleuchtung der empfindlichen Zelle (13) enthaltend einen Kollimator (27) mit einer Lichtquelle (31) für sichtbares Licht, einen Kondensor (30), eine Blende (29) und ein Objektiv (28) zur Herstellung eines Bündels von parallelen Lichtstrahlen.

24. Umwandler nach einem der Ansprüche 18 bis 23, gekennzeichnet durch Mittel zur Behandlung und Sichtbarmachung der aus der Zelle austretenden Lichtstrahlen enthaltend eine afokale Einrichtung bestehend aus zwei zylindrischen Linsen (38, 39), einem Porro-Prisma (40), einem Mattglas (41) und einer binokularen Linse (42).

25. Verwendung des Umwandlers nach einem der Ansprüche 4 bis 24 zur Sichtbarmachung von Körpern mittels deren im Infraroten liegenden Wärmestrahlung und zum Messen der Oberflächentemperaturgradienten solcher Körper.

**Claims**

1. Method for converting thermal images into visible images namely for viewing an object emitting infrared radiation, in which a thermal image is formed, namely that of the said object, on a face of a plane dioptric interface which is covered by at least one layer of liquid material absorbing electromagnetic radiation, the distribution of the temperatures in this thermal image then being translated by a variation of the physical parameters of the said layer, lighting the other face of said dioptric interface which is reflective or transmissive by a beam of parallel light rays whose optical properties are subjected, during the reflection or the transmission through the plane dioptric interface to a corresponding variation of its optical properties, and forming in the viewing plane an viewable secondary image exhibiting this latter variation, the said method being characterised in that the reflection or transmission of the beam of parallel light rays is effected on a plane dioptric interface constituted by a liquid-liquid interface of low surface tension obtained by mixing two liquids partially miscible at operating temperature and pressure.

2. Method according to claim 1, characterised in that, in the vicinity of the free surface of the liquid absorbing the thermal radiation is disposed a reflective grating, or the image of a diffraction grating is formed in the vicinity of the said surface.

3. Method according to either of claim 1 or 2, characterized in that the beam of parallel light rays or emerging from a point source emanates from a source emitting visible light.

4. Converter for carrying out the method according to any one of claims 1 to 3, comprising a lighting system providing a beam of parallel light rays or a beam emerging from a point source (31, 27), a plane dioptric interface reflecting or transmitting the beam (13), an optical device (11, 12) adapted notably for infrared radiation, a viewing system (37, 41), the reflecting or transmitter dioptric interface being covered by at least one layer (19) of liquid material absorbing thermal radiation on which the said optical device forms a thermal image of an object (10) emitting electromagnetic radiation, the distribution of temperatures in this image being translated by a variation of the physical parameters of the said layer, the said reflected or transmitted beam (32, 35, 36) then being subjected to a corresponding variation of its optical properties, this variation being exhibited by the said viewing system, the said converter being characterised in that the plane dioptric interface is constituted by a liquid-liquid interface (19, 20) of low surface tension obtained by mixing two liquids partially miscible at the operating temperature and pressure.

5. Converter according to claim 4, characterised in that it further comprises a reflecting grating located in the vicinity of the free surface of the liquid absorbing the thermal radiation or a diffraction grating the image of which is formed in the vicinity of the said free surface.

6. Converter according to claim 4, characterised in that it further comprises a glass plate transparent to infrared radiation disposed in the vicinity of the free surface of the liquid absorbing the thermal radiation.

7. Converter according to any one of claims 4 to 6, characterised in that the reflecting or transmitter dioptric interface is covered with two layers of liquid material, one of the layers absorbing the thermal radiation.

8. Converter according to any one of claims 4 to 7, characterised in that the plane dioptric interface is constituted by a carrier liquid-carried liquid interface, the carried liquid being saturated in carrier liquid at ambient temperature and normal pressure, the said carried liquid absorbing the near

**0010031**

infrared having a viscosity between 0.5 and 100 centistokes at ambient temperature, having low heat conductivity, having interfacial tension with the carrier liquid of the order of $\alpha_{AB} = 1$ dyne/cm or less at ambient temperature, and forming a layer having a thickness between 5 and 300 microns, whereas the carrier liquid, saturated in carried liquid, has a viscosity of the order of one centistoke or more at ambient temperature.

9. Converter according to claim 8, characterised in that the carried liquid absorbs the infrared radiation in the spectral band of 8 to 12 microns or 3 to 5 microns.

10. Converter according to any one of claims 4 to 9, characterised in that the carried liquid is chosen among substituted polysiloxanes, silicone oils, acetic acid, methanol, phenylactic acid, butyric acid, diphenylamine, proprionic acid, p-nitrochlorobenzene, acetic anhydride, acetonitrile, camphor, formic acid, cyclopentane, methylcyclopentane, cyclohexane and methylcyclohexane, and the carrier liquid is chosen among monobromonaphtalene, carbon tetrachloride, carbon sulfide and methylene iodide.

11. Converter according to any one of claims 4 to 10 operating with total reflection, characterised in that it further comprises a prism supporting the liquids, the refractive index of the carrier liquid being greater or very different from that of the carried liquid or equal to or substantially equal to that of the prism.

12. Converter according to any one of claims 4 to 10 operating with partial reflection or transmission, characterised in that the refractive indexes of the carried and carrier liquid are different.

13. Converter according to any one of claims 4 to 12, characterised in that the lighting system is constituted by a coherent or incoherent, mono- or polychromatic source, notably of the visible light.

14. Converter according to any one of claims 4 to 13, characterized in that the infrared optical device is a dioptric, catadioptric or catodioptric lens.

15. Converter according to any one of claims 4 to 14, characterized in that the viewing system is constituted by a screen or a detection system using Schlieren, Schlieren-inferential, phase contrast or holographic type methods.

16. Converter according to claim 15, characterised in that the screen is placed in the vicinity of the liquid-liquid interface.

17. Converter according to any one of claims 4 to 11 and 13 to 16, characterised in that the viewing system is constituted by a screen disposed directly at the exit of the prism.

18. Converter for carrying out the method according to any one of claims 1 to 3 comprising means for receiving infrared radiation emitted by the object to study, the said means comprising a cell sensitive to infrared radiation, means for lighting the said sensitive cell and means for treating or viewing the light rays exiting the said cell, the said converter being characterised in that the sensitive cell comprises a first tank containing two liquids partially miscible at the operating temperature and pressure and thus forming a liquid-liquid interface of low surface tension, designated the active interface, a face of the said first tank turned towards the said object being permeable to infrared rays, a second tank containing another liquid-liquid interface, called the compensation interface, which remains substantially parallel to the active interface, the arrangement being such that the infrared radiation emitted by the object is focused on the least dense liquid contained in the first tank, such that the means for lighting the cell produces a beam of parallel light rays lighting the active interface with an angle of incidence such that their reflection on the latter is substantially total, the said rays reflected off the active interface in turn being reflected off the compensation interface forming a beam of rays capable of being viewed in the treatment means and such that the parallel light beam lighting the sensitive cell transverses the said cell without substantial modification of its direction whatever the position of the converter in space.

19. Converter according to claim 18, characterised in that the sensitive cell is essentially constituted by two tanks joined to two parallel faces of a rhombohedron, the first tank comprising the active interface sensitive to the infrared rays, the face of the first tank opposite to the rhombohedron and turned towards the object to study comprising a window transparent to the infrared, such as a window of germanium, an inert gas such as nitrogen being interposed in the free zone of the first tank between the liquid layer and the window, the second tank essentially containing a mercury bath and a liquid having an index identical to that of the glass of the rhombohedron, which liquid is disposed between the mercury bath and the adjacent face of the rhombohedron.

20. Converter according to claim 19, characterised in that the free faces of the rhombohedron are perpendicular to the middle rays of the light beam lighting the cell.

21. Converter according to either claim 1 or 2, characterised in that the angle of reflection of the light beam of the active interface is advantageously 60°.

22. Converter according to any one of claims 18 to 21, characterised in that the means for receiving the infrared radiation comprise in the direction of the said radiation, a lens and a diaphragm, for example an iris diaphragm, permitting focusing of the said radiation on the least dense liquid contained in the first tank of the sensitive cell.

23. Converter according to any one of claims 18 to 22, characterised in that the means for lighting the sensitive cell are constituted by a collimator comprising a light source emitting visible light, a condenser, a diaphragm and a lens, which permits a beam of parallel light beams to be obtained.

16

**0010031**

24. Converter according to any one of claims 18 to 23, characterised in that the means for treating and viewing the light rays exiting the cell comprise an afocal assembly constituted by two cylindrical lenses, a Porro prism, a frosted lens and a double eyepiece.

25. Use of the converter according to any one of claims 4 to 24 for making bodies visible by means of their thermal radiation located in the infrared range and for measuring surface temperature gradients of the bodies.

Solution A

$I_{AB}$

Solution B

C

FIG.1

IR

$O_1$

Air.

Solution A

$I_{AB}$

Solution B

FIG.2

IR

$L_2$

A

B

C

visible

P

FIG.8

FIG.3

FIG.4

FIG.5

FIG. 6

FIG.7

**0010031**

FIG.9

FIG.10

0010031